Europäisches Patentamt

European Patent Office

Office européen des brevets

(11) Veröffentlichungsnummer: **0 417 300 A1**

## EUROPÄISCHE PATENTANMELDUNG
### veröffentlicht nach Art. 158 Abs. 3 EPÜ

(21) Anmeldenummer: 90902713.8

(22) Anmeldetag: 19.09.89

(86) Internationale Anmeldenummer:
PCT/SU89/00246

(87) Internationale Veröffentlichungsnummer:
WO 90/08719 (09.08.90 90/19)

(51) Int. Cl.5: **B65G 33/00, B65G 33/26, B21D 11/06**

(30) Priorität: 24.01.89 SU 4634030

(43) Veröffentlichungstag der Anmeldung:
**20.03.91 Patentblatt 91/12**

(84) Benannte Vertragsstaaten:
**DE FR IT SE**

(71) Anmelder: **ARMAVIRSKA GOSUDARSTVENNY PEDAGOGICHESKY INSTITUT**
**ul. Rozy Ljuxemburg, 159**
**Armavir, 352900(SU)**

(72) Erfinder: **SERGA, Georgy Vasilievich**
**ul. Efremova, 111-131**
**Armavir, 352932(SU)**

(74) Vertreter: **Nix, Frank Arnold, Dr.**
**Kröckelbergstrasse 15**
**W-6200 Wiesbaden(DE)**

(54) HOHLSCHNECKE AUS WALZBAND UND VERFAHREN ZU DEREN HERSTELLUNG.

(57) Die Hohlschnecke (1) aus Walzband weist eine Führungsfläche auf, die von Bändern (2, 3, 4) gebildet ist, deren Kanten sowohl im Längs- als auch im Querschnitt der Schnecke nach einer Schraubenlinie angeordnet sind.

Die erfindungsgemässe Schnecke wird durch vorheriges Verdrehen der Bänder relativ zu deren Längsachse mit anschliessender Biegung, z.B. an einem Dorn, in Querrichtung sowie durch Verbinden der Bänder miteinander über die Kanten hergestellt.

FIG.1

# HOHLSCHNECKE AUS WALZBAND UND VERFAHREN ZU DEREN HERSTELLUNG

## Technisches Gebiet

Die vorliegende Erfindung bezieht sich auf den Maschinenbau, und betrifft insbesondere Schnecken, u.z. Hohlschnecken aus Walzband sowie ein Verfahren zu deren Herstellung.

## Zugrundeliegender Stand der Technik

Es sind verschiedenartige Konstruktionen von Schnecken bekannt, die gewöhnlich in Form eines nach einer Schraubenlinie verdrehten Bandes ausgeführt werden (SU, A, l38863). Bei der Verwendung einer solchen Schnecke wird diese in einem Gehäuse untergebracht, das einen Kanal für die Beförderung bildet. Die Wirksamkeit des Betriebes eines Schneckenförderers ist in einem bedeutenden Maße durch die Geschwindigkeit begrenzt, bei der ein Verstopfen des Kanals und ein Stoppen der Schnecke eintreten. Solche Schnecken verwirklichen die Beförderung mit einem stationären Charakter der Orientierung des Gutes, wodurch die Möglichkeiten eines Einsatzes der Schneckenvorrichtung als Vorrichtung zur technologischen Behandlung, z.B. zum Trocknen, Scheuern, Vermischen und zur Durchführung ähnlicher Prozesse eingeschränkt werden, d.h. in den Fällen begrenzt werden, wo es notwendig ist, Transport- und technologische Funktionen in einem Aggregat zu vereinigen.

Eine wesentlich höhere Wirksamkeit weist eine Hohlschnecke auf, deren Innenwände, welche als Führungsfläche dienen, von mindestens drei Bändern gebildet werden, die mittels auf Schraubenlinien im Längsschnitt der Schnecke liegenden Kanten miteinander verbunden sind (SU, A, l260306).

Eine solche Schnecke mit einer krummlinigen Innen fläche gewährleistet eine Vereinigung von Transport- und technologischen Funktionen in einem Aggregat und sichert die Möglichkeit, Behandlungsarbeitsgänge, wie Scheuern, Vermischen, Zerkleinern und ähnliche während der Beförderung durchzuführen, weil dabei die Orientierung des resultierenden Bewegungsvektors geändert wird.

Solchen Schnecken sind jedoch einige Nachteile eigen. Einer von diesen Nachteilen besteht darin, dass trotz einer Änderung der Orientierung des resultierenden Vektors der Bewegung der Teilchen des Gutes, die von diesen Schnecken im Unterschied zu den obenbeschriebenen gewährleistet wird, diese Änderung jedoch nicht ausreichend gross ist, um eine intensive Behandlung während der Beförderung sicherzustellen. Ein anderer Nachteil besteht in der komplizierten Fertigung einer solchen Schnecke, insbesondere beim Zusammenfügen der Bänder an deren Kanten, sowie in der Bildung von mechanische abgeschwächten Abschnitten in den Verbindungszonen. Der Zusammenbau der Schnecken aus Platten in Form von gleichseitigen Dreiecken, führt zur Bildung einer gebrochenen, aber nicht zügig verlaufenden Schraubenlinie, die aus Abschnitten gleicher Länge von geraden Linien besteht.

## Offenbarung der Erfindung

Der vorliegenden Erfindung liegt die Aufgabe zugrunde, der Oberfläche einer Hohlschnecke eine solche Form zu verleihen, dass dadurch der Bereich der Änderungen der resultierenden Vektoren der Bewegung erweitert wird.

Die gestellte Aufgabe wird dadurch gelöst, dass bei einer Hohlschnecke aus Walzband, welche eine Führungsfläche aufweist, die von mindestens drei Bändern gebildet wird, deren Kanten im Längsschnitt der Schnec ke eine Schraubenlinie bilden, erfindungsgemäss die Kanten der Bänder auf einer Schraubenlinie auch im Querschnitt der Schnecke liegen. Im Ergebnis sind über den Umfang der Schnecke schraubenförmige Innenflächen, die sich nach ihrer Ganghöhe und der Gangzahl unterscheiden und gegenläufig gerichtet sind, sowie ihren Kreuzungen entsprechende Schraubenlinien an der Aussenfläche der Schnecke gebildet. Durch die Bildung einer komplizierten Innen- und Aussenfläche der Schnecke als Kombination von zwei krummlinigen Oberflächen, bei denen in jedem Punkt verschieden gerichtete Bewegungskomponenten entstehen, wird die Behandlungswirkung infolge des Vorhandenseins von verschieden gerichteten Vektoren erhöht. Auf diese Weise wird durch eine doppelte Krümmung der Oberfläche eine Verstärkung des technologischen und des Transporteffektes erzielt, weil in jedem Punkt der Oberfläche verschieden gerichtete Vektoren vorhanden sind.

Die Bänder können eine veränderliche Breite aufweisen, die sich insbesondere in Richtung von einem Ende der Schnecke zu dem anderen Ende hin verjüngt; dadurch wird es möglich, eine allmähliche Verdichtung der Masse des Gutes zu verwirklichen.

Die Bänder können in der Querrichtung mit Rippen versehen werden, wobei sich je zwei benachbarte Rippen des einen Bandes miteinander und mit zwei Rippen des anderen benachbarten Bandes auf einer längsverlaufenden Schraubenlinie der benachbarten Bänder unter Bildung abwechselnder Seitenfläche kreuzen, welche unter einem stumpfen Winkel relativ zu-einander paarweise an der Aussen- und Innenseite der Schnecke liegen, wobei diese Winkel entweder gleich sein oder allmählich in Richtung von einem Ende der Schnecke zu dem anderen hin in Abhängigkeit von den Anforderungen, die an die Behandlung gestellt werden, zunehmen können.

Zur Herstellung der erfindungsgemässen Hohlschnecke werden Bänder entsprechend der Anzahl der Führungsflä chen durch Feststellen der Bandenden und durch Verdrehen derselben um die Eigenachse geformt, wobei man erfindungsgemäss nach dem Verdrehen des Bandes jeweils ein Ende jedes Bandes freigibt und jedes Band zusätzlich einer spiralförmigen Aufwicklung durch Drehen des freien Endes relativ zu der Längsachse mit gleicher Ganghöhe und gleichem Durchmesser für alle Bänder aussetzt, so dass anschliessend längs der Kanten der spiralförmig aufgewickelten Bänder die Oberflächen der Verbindung der Bänder zu einer Schnecke gebildet werden.

Bei einem solchen Verfahren wird die Bildung einer Innenfläche mit doppelter Krümmung gewährleistet.

Das erfindungsgemässe Verfahren sieht ein Verdrehen der Bänder nicht nur in Längs-, sondern auch in Querrichtung vor, wobei dadurch die Notwendigkeit einer örtlichen Erwärmung, einer plastischen Verformung,einer Anpassung und ähnlicher Arbeitsgänge ausgeschlossen und die Möglichkeit einer Herstellung der Schnecke unter Anwendung der Mechanisierung und der Automatisierung gewährleistet werden.

Es ist zweckmässig, vor dem Verdrehen Zonen eines abgeschwächten Querschnittes in Längsrichtung der Bänder nach Linien herzustellen, die paarweise unter einem Winkel zu-einander verlaufen. Dadurch können relativ zu-einander geneigt liegende Oberflächen der Schnecke geschaffen werden, welche sich diskret um den Umfang verteilen und relativ zu den Schraubenlinien der Verbindung der Bänder zur Intensivierung der Behandlung des Gutes verschieden gerichtet sind, sowie Schraubenlinien entgegengesetzter Richtung der schraubenförmigen Kanten der Bänder über den Umfang der Schnecke gebildet werden, die unterschiedliche Ganghöhe und unterschiedliche Gangzahl aufweisen.

Die Zonen eines abgeschwächten Querschnittes können durch Einkerben des Bandes hergestellt werden. Nach dem Verbinden der Kanten werden die Ränder der Einker bungen miteinander verbunden.

Kurze Beschreibung der Zeichnungen

Nachstehend wird die Erfindung anhand der Beschreibung von konkreten Ausführungsformen der Erfindung unter Bezugnahme auf die beigefügten Zeichnungen näher erläutert. Es zeigen:

Fig. 1 die Gesamtansicht einer erfindungsgemässen Schnecke;

Fig. 2 den Schnitt nach der Linie II-II der Fig. 1 (vergrössert);

Fig. 3 die Gesamtansicht einer anderen Ausführungsform der Schnecke;

Fig. 4 die Ansicht in der Pfeilrichtung A in Fig. 3;

Fig. 5 die Gesamtansicht einer weiteren Ausführungsform der Schnecke mit einem Ausschnitt;

Fig. 6 die Ansicht in der Pfeilrichtung B in Fig. 5 (vergrössert);

Fig. 7 die Gesamtansicht noch einer Ausführungsform der Schnecke;

Fig. 8 die Ansicht in der Pfeilrichtung C in Fig. 7;

Fig. 9 einen Querschnitt durch die Schnecke mit einem in ihr befindlichen Gut;

Fig. 10 ein Schneckenaggregat, bei dem die Schecke in einem Gehäuse untergebracht ist;

Fig. 11 die Ansicht eines Bandes an einem Dorn nach dem Verdrehen der Bandenden;

Fig. 12 den Schnitt nach der Linie XII-XII in Fig. 11;

Fig. 13 einen Schnitt,der dem Schnitt nach der Linie XII-XII in Fig. 11 ähnlich ist und eine Deckung der Kanten der Bänder veranschaulicht;

Fig. 14 die Ansicht eines Bandes mit abgeschwächten Querschnitten für eine Schnecke, die in Fig. 3 wiedergegeben ist (im Grundriss);

Fig. 15 die Ansicht eines Bandes mit abgeschwächten Querschnitten für eine Schnecke, die in Fig. 5 wiedergegeben ist (im Grundriss);

Fig. 16 die Ansicht eines Bandes mit abgeschwächten Querschnitten für eine Schnecke, die in Fig. 7 wiedergegeben ist (im Grundriss);

Fig. 17 den Schnitt nach der Linie XYII-XYII der Fig. 16;

Fig. 18 die schematische Darstellung eines Verfahrens zur Herstellung einer Schnecke durch gleichzeitiges Biegen von drei Bändern.

Bevorzugte Ausführungsform der Erfindung

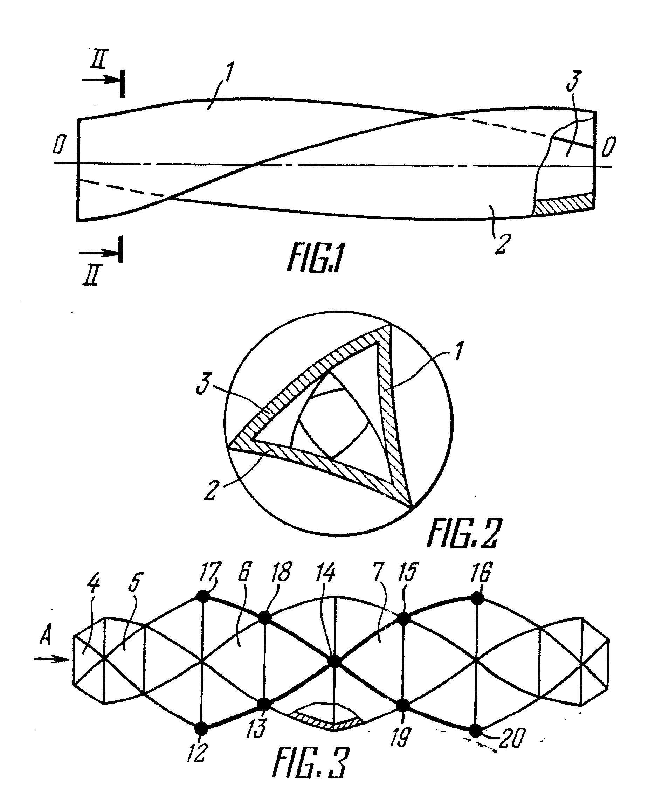

Betrachten wir Fign 1 und 2, die zeigen, dass die mit dem Bezugszeichen 1 bezeichnete Schnecke von drei Bändern 2, 3 und 4 gebildet ist. Jedes dieser Bänder ist in Längsrichtung relativ zu der eigenen Symmetrieachse des Bandes verdreht.

Ausserdem ist jedes Band im Querschnitt relativ zu der Längsachse 0-0 der Schnecke so gedreht, dass dessen Kanten in Querrichtung des Bandes eine Schraubenlinie mit gleicher Ganghöhe für alle Bänder bilden.

Durch das Verdrehen jedes Bandes in Querrichtung wird eine zusätzliche Krümmung der Schneckenoberfläche erzielt, wodurch die Differenz zwischen den Neigungswinkeln der Vektoren der Bewegung der Teilchen eines Gutes oder der Teile auf benachbarten Abschnitten der Schneckenoberfläche vergrössert wird. Dabei bewegen sich die Teilchen eines Gutes oder die Teile auf komplizierten Bahnen, wobei die Häufigkeit von Zusammenstössen erhöht oder, mit anderen Worten gesagt, der Prozess intensiviert wird.

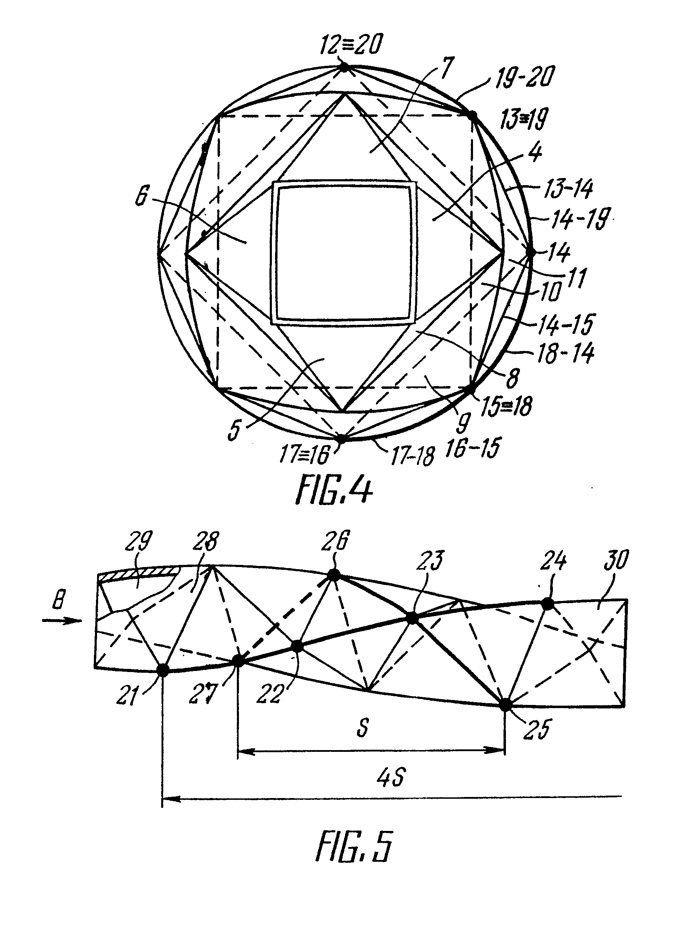

Wie in Fig. 3 dargestellt ist, haben die eine Schnecke bildenden Bänder 4, 5, 6, 7 eine veränderliche Breite (Fig. 3, 4) so dass die Schnecke einen veränderlichen Längs- und Querschnitt aufweist. Ausserdem weisen die Bänder 4, 5, 6, 7 abwechselnde Abschnitte 8, 9, 10, 11 usw. auf, die paarweise unter einem stumpfen Winkel zueinander (Fig. 3) liegen, d.h., die Abschnitte 8 und 9; 10 und 11 (wie in Fig. 4 am besten veranschaulicht ist) liegen unter einem stumpfen Winkel relativ zueinander.

Über den Umfang der Schnecke (Fig. 3, 4) sind verschieden gerichtete schraubenförmige Innenflächen und Schraubenlinien über die Aussenfläche der Schnecke mit gleicher Ganghöhe und gleicher Ganganzahl gebildet. In Fig. 3 ist eine Schnecke mit vier zügig verlaufenden schraubenförmigen Innenflächen und Schraubenlinien an der Aussenfläche der Schnecke in einer Richtung sowie mit vier gebrochenen schraubenförmigen Oberflächen und entgegengesetzt gerichteten Linien dargestellt, die aus Abschnitten von geraden Linien unterschiedlicher Länge bestehen. Hier ist auch eine von den vier zügig verlaufenden Schraubenlinien mit einer Richtung als eine durch die Punkte 12, 13, 14, 15, 16 durchgehende dicke Linie dargestellt, die aus Abschnitten von geraden Linien unterschiedlicher Länge besteht; es ist auch eine von den vier gebrochenen Schraubenlinien mit entgegengesetzter Richtung wiedergegeben, die durch die Punkte 17, 18, 14, 19, 20 durchgeht.

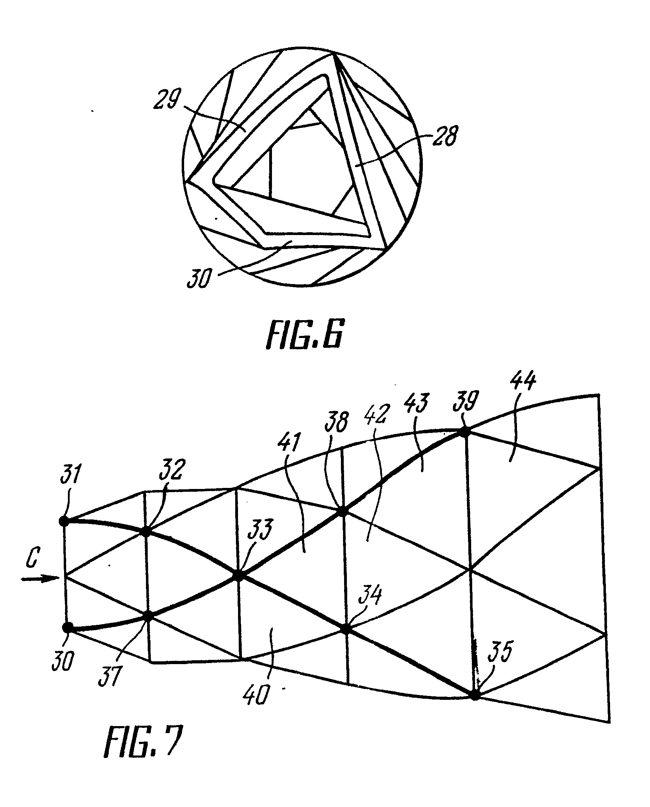

Eine Schnecke einer ähnlichen Ausführungsform mit abwechselnden Abschnitten, jedoch mit einer gleichbleibenden Breite der Bänder ist in Fig. 5, 6 wiedergegeben. Die Schnecke weist drei zügig verlaufende schraubenförmige Oberflächen und Linien einer Richtung sowie zwei gebrochene schraubenförmige Oberflächen und Linien der entgegengesetzten Richtung auf, wobei die Ganghöhe "s" der schraubenförmigen Oberflächen und der Linien einer Richtung um das vierfache die Ganghöhe der schraubenförmigen Oberflächen und der Linien der entgegengesetzten Richtung übersteigen. In Fig. 5 ist mit einer dicken, durch die Punkte 21,22,23,24 durchgehenden Linie ein Teil einer von den drei zügig verlaufenden Schraubenlinien einer Richtung, und mit einer durch die Punkte 23,25,26,27 durchgehenden Linie eine von den zwei gebrochenen Schraubenlinien der entgegengesetzten Richtung dargestellt.

Die in Fig. 5, 6 wiedergegebene Schnecke besteht aus drei Bändern 28, 29, 30 einer gleichbleibenden Breite.

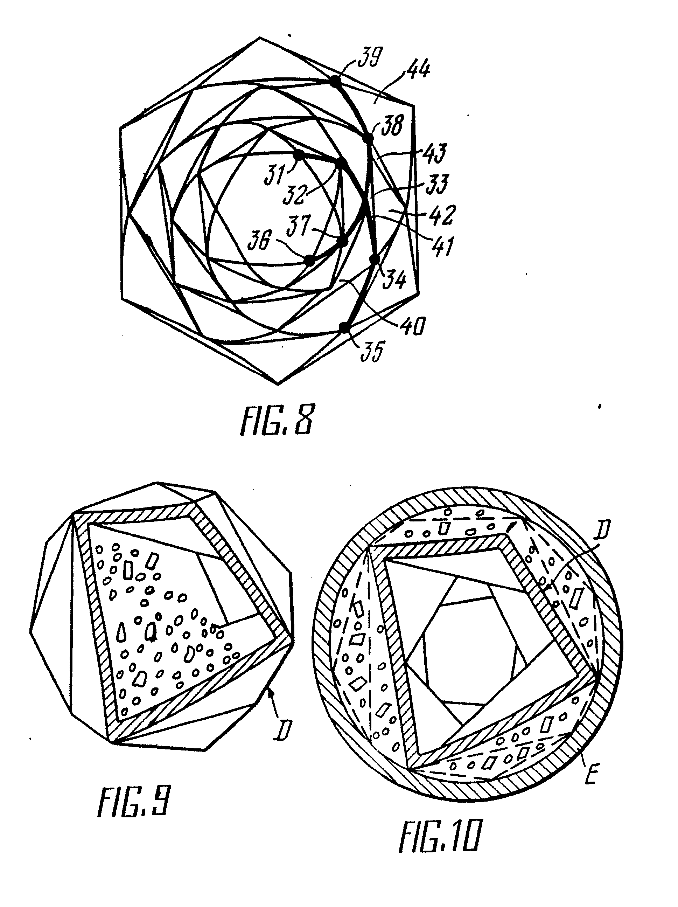

In Fig. 7, 8 ist eine Schnecke einer ähnlichen Ausführungsform mit sechs schraubenförmigen Oberflächen und zügig verlaufenden Linien einer Hauptrichtung und sechs gebrochenen Schraubenlinien und Nuten der entgegengesetzten Richtung und dabei mit gleicher Ganghöhe dargestellt. In Fig. 7, 8 ist mit einer dicken durch die Punkte 31, 32, 33, 34, 35 durchgehenden Linie eine von den sechs gebrochenen Linien einer Richtung, die aus Abschnitten von geraden Linien unterschiedlicher Länge besteht, und mit einer durch die Punkte 36, 37, 33, 38, 39 durchgehenden Linie eine von den sechs zügig verlaufenden Schraubenlinien der entgegengesetzten Richtung dargestellt. Die in Fig. 7, 8 wiedergegebene Schnecke ist aus sechs sich in Längsrichtung verbreiternden Bändern ausgeführt, die von abwechselnden Abschnitten, z.B. Abschnitten 40, 41, 42, 43, 44 gebildet sind, welche unter stumpfen Winkeln relativ zu einander liegen.

Alle oben beschriebenen Schnecken (Fig. 1 bis 3) können zu einer inneren Bewegung des Gutes (Fig. 9) betrieben werden. Bei der Drehung der Schnecke D bewegt sich das Gut über die zügig verlaufenden schraubenförmigen Oberflächen einer Richtung, z.B., in der Schnecke (Fig. 1, 2) über die zügig verlaufenden Wände in Form von schraubenförmigen Oberflächen; in den Schnecken gemäss Fig. 3, 4, 5, 6, 7, 8 bewegt sich das Gut über die Wände in Form von diskret angeordneten ebenen Elementen.

Es muss betont werden, dass durch Vorhandensein von über den Umfang angeordneten schraubenförmigen Oberflächen und Linien einer anderen Richtung mit unterschiedlicher Ganghöhe und unterschiedlicher Gang anzahl eine komplizierte räumliche Bewegung der Ströme des zu befördernden Gutes erzeugt und die technologischen Prozesse in Schnecken der erfindungsgemässen Konstruktionen intensiviert werden.

Bei den Ausführungsformen gemäss Fig. 3 bis 8 wird eine zusätzliche Intensivierung der Behandlung durch Vorhandensein der abwechselnden Oberflächen 8 bis 11 und 40 bis 44 (Fig. 3 bis 7) erzielt, die unter einem stumpfen Winkel relativ zueinander geneigt sind und verschieden gerichtete schraubenförmige Oberflächen einer komplizierten Krümmung schaffen. Bei den Ausführungsformen gemäss Fig. 3 und Fig. 7 wird eine Intensivierung des Prozesses auch durch eine allmähliche Verdichtung der Masse des zu befördernden Gutes oder durch eine Volumenausdehnung des Raumes erzielt, in dem sich das Gut die Längsachse der Schnecke entlang bewegt.

Fig. 9 zeigt eine Schnecke D mit einem darin befindlichen zu befördernden Gut, wobei diese Schnecke mit dem zu befördernden Gut leichter beladen werden kann. Bei der Unterbringung der Schnecken D gemäss Fig. 1 bis 8 in einem Gehäuse E (Fig. 10) werden mindestens drei schraubenförmige Beförderungskanäle mit einer schraubenförmigen Oberfläche einer komplizierten Krümmung gebildet, wobei die Geschwindigkeit der Beförderung des Gutes in diesen Kanälen bedeutend höher ist, als bei der inneren Anordnung des Gutes in der Schnecke, wie das in Fig. 9 wiedergegeben ist.

Es ist auch die Herstellung von Bändern nach anderen Verfahren, z.B. durch Walzen, möglich.

Betrachten wir das Verfahren zur Herstellung einer Schnecke, die in Fig. 1 wiedergegeben ist und von drei Bändern gebildet wird.

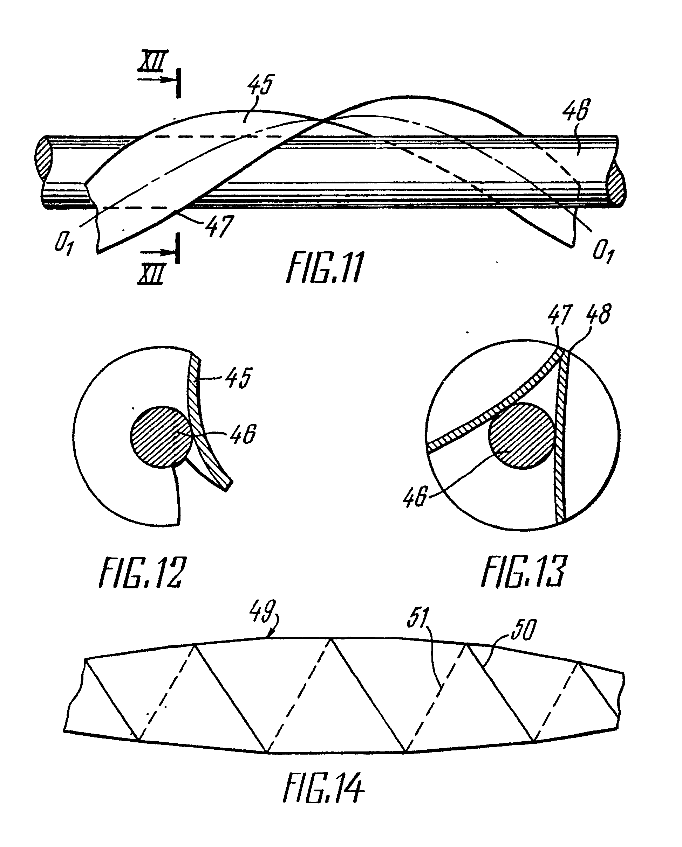

Jedes Band 45 wird vorherig relativ zu der Längsachse $0_1$-$0_1$ desselben nach einem beliebigen bekannten Verfahren verdreht. Das kann z.B. so vorgenommen werden, dass das eine der Bandenden im warmen oder im kalten Zustand festgestellt, während das andere Bandende in vorgegebener Richtung gedreht wird. Das auf diese Weise verdrehte Band 45 wird an einem Dorn 46 (Fign 11 imd 12) angebracht und so gebogen, dass die Kanten 47 (Fig. 11) des Bandes 45 in Querrichtung nach einer Schraubenlinie verlaufen. Dabei wird das Band 45 verformt und dann entweder vom Dorn abgenommen oder an diesem Dorn im verformten Zustand arretiert. Ähnlich werden die übrigen Bänder, welche eine Schnecke bilden, z.B., zwei Bänder, verformt.

Es muß betonnt werden, dass diese übrigen Bänder entweder aufeinanderfolgend an einem und demselben Dorn verformt oder an dem Dorn verformt werden können, an welchem die früher verformten Bänder arretiert sind.

Jedenfalls werden die Bänder 45 am Dorn 46 so angeordnet, dass sich die Kanten 47, 48 der benachbarten Bänder decken, wonach diese Kanten nach einem beliebigen bekannten Verfahren, z.B., durch Schweissen verbunden werden. Es muss unterstrichen werden, dass für die Durchführung des erfindungsgemässen Verfahrens die Ganghöhe bei der Aufwicklung der Bänder auf den Dorn gleichbleibend sein muss. Die Bänder können auch ohne Dorn mittels beliebiger einschlägiger Ein- und Vorrichtungen aufgewickelt werden, die eine Anordnung der Längskanten der Bänder nach einer Schraubenlinie mit gleichen Durchmesser und Naht gewährleisten.

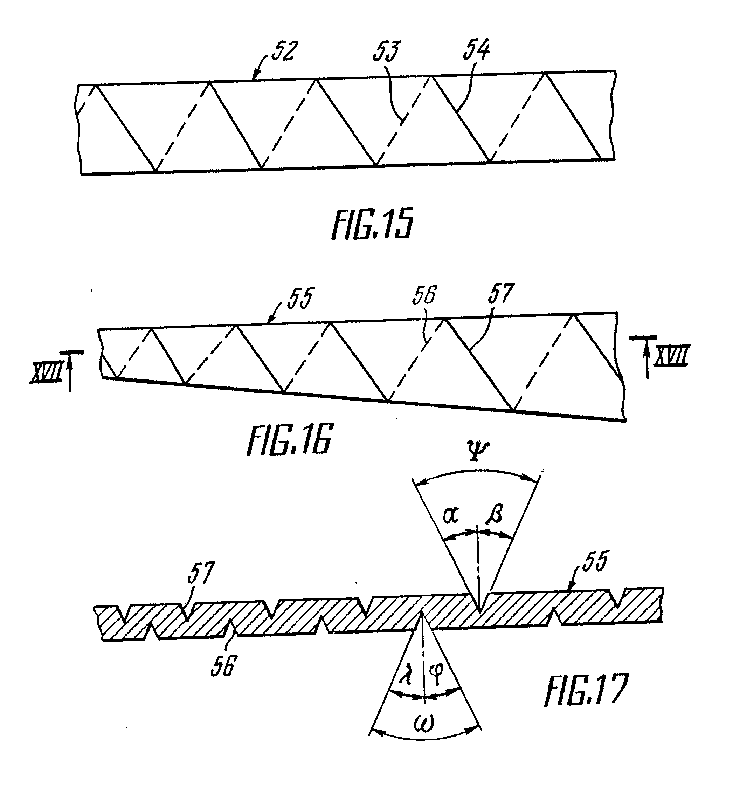

Wie das in Fig. 14 bis 16 wiedergegeben ist, weisen die Bänder 49, 52, 55 abgeschwächte Zonen 50, 51, 53, 54, 56, 57 auf, welche paarweise unter einem Winkel relativ zu einander liegen. Diese Zonen werden z.B. mit Hilfe einer Einkerbung 56, 57 des Bandes 55 (Fig. 17) durch Fräsen, spanlose Formung oder in einem ähnlichen Verfahren gebildet.

Nach der Verdrehung eines solchen Bandes, wie das in Fig. 11 dargestellt ist, werden Abschnitte gebildet, die unter einem Winkel relativ zu einander geneigt liegen, wie das in Fig. 3, 5, 7 wiedergegeben ist. Da bei ist der Neigungswinkel der Abschnitte zu-einander durch die Geometrie der Einkerbungen 56, 57 und die Winkel $\alpha$, $\beta$, $\psi$, $\lambda$, $\phi$, $\omega$ der Wände der Einkerbungen 56, 57 bestimmt, d.h., er richtet sich nach den Winkeln, unter welchen die Wände der Einkerbungsvertiefungen zu-einander und zu der Senkrechten zur Bandoberfläche geneigt sind, die durch die Spitze der Einkerbungsvertiefung gezogen ist.

Die Geometrie der Einkerbungen, die Grössen der Winkel $\alpha$, $\beta$, $\psi$, $\lambda$, $\phi$, $\omega$, deren gegenseitige Anordnung relativ zu-einander und relativ zu den Bandkanten bestimmen auch die Anzahl und die Ganghöhe der entgegengesetzt gerichteten Schraubenlinien, welche bei der Herstellung einer Schnecke von den Kanten 47, 48 der Bänder gebildet werden.

Nach dem Verbinden der Kanten der Bänder (Fig. 13) kann man die Ränder der Einkerbungen 56, 57 (Fig. 17), z.B. durch Schweissen (in Fig. nicht wiedergegeben), verbinden.

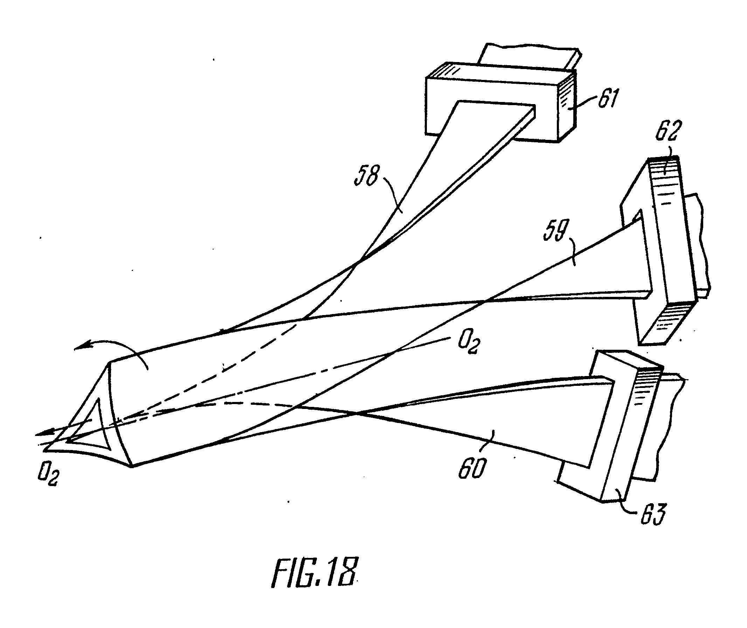

In Fig. 18 ist ein Verfahren zur Herstellung einer Schnecke dargestellt, bei dem jedes der Bänder 58, 59, 60 durch schlitzförmige Führungshalter 61, 62 63 geführt werden, wonach die Bänder miteinander, z.B., durch Schweissen verbunden werden, die miteinander verbundenen Bänder gedreht und fortschreitend mit gleicher Geschwindigkeit bewegt werden, wobei sie gleichzeitig so gebogen werden, dass deren Achsen und Kanten relativ zu der Achse $0_2$-$0_2$ der Schnecke spiralförmig angeordnet werden.

Gewerbliche Anwendbarkeit

Die Erfindung kann zur Beförderung von Schüttgut und zähflüssigem Gut sowie zur Behandlung von Gut oder Stückgütern welche als Massengut bewegt werden, ihre Anwendung finden.

## Ansprüche

1. Hohlschnecke aus Walzband, welche eine Führungsfläche aufweist, die von mindestens drei Bändern (2, 3, 4) gebildet ist, deren Kanten im Längsschnitt der Schnecke eine Schraubenlinie bilden, dadurch **gekennzeichnet,** dass die Kanten der Bänder nach einer Schraubenlinie auch im Querschnitt der Schnecke liegen.

2. Schnecke nach Anspruch 1, dadurch **gekennzeichnet,** dass die Bänder (4, 5, 6, 7) eine veränderliche Breite aufweisen.

3. Schnecke nach Ansprüchen 1, 2, dadurch **gekennzeichnet,** dass die Bänder (4, 5, 6, 7) in Querrichtung mit Rippen versehen sind, wobei sich jede zwei benachbarte Rippen des einen Bandes mit zwei Rippen des anderen Bandes auf einer längsverlaufenden Schraubenlinie (12, 13, 14, 15, 16) der benachbarten Bänder unter Bildung der abwechselnden Seitenflächen (8, 9, 10, 11), welche unter stumpfen Winkeln relativ zu einander paarweise an der Aussen- und Innenseite der Schnecke liegen und der gegenläufig zueinander gerichteten schraubenförmigen Innenflächen und der Schraubenlinien (12, 13, 15, 16; 17, 18, 14, 20) an der Aussenfläche der Schnecke, welche unterschiedliche Ganghöhe und Gangzahl aufweisen, kreuzen, wobei die Umrisse der schraubenförmigen Oberflächen und Schraubenlinien einer Richtung durch die zügig verlaufenden schraubenförmigen Kurven gebildet sind, und die Umrisse der schraubenförmigen Oberflächen und der Schraubenlinien der entgegengesetzten Richtung durch die Abschnitte von geraden Linien gebildet sind.

4. Schnecke nach Anspruch 3, dadurch **gekennzeichnet,** dass die Schraubenlinien und die Oberflächen der zwei entgegengesetzten Richtungen durch Abschnitt von geraden Linien unterschiedlicher Länge gebildet sind.

5. Schnecke nach Anspruch 3, dadurch **gekennzeichnet,** dass die stumpfen Winkel an der Aussen- und Innenseite der Schnecke untereinander gleich sind.

6. Schnecke nach Anspruch 3, dadurch **gekennzeichnet,** dass die Grösse der zwischen den benachbarten Seitenflächen eingeschlossen Winkel in Richtung von einem Schneckenende zu dem anderen hin zunimmt.

7. Schnecke nach Anspruch 1, dadurch **gekennzeichnet,** dass die Schnecke in einem Gehäuse untergebracht ist und mindestens drei schraubenförmige Kanäle bildet, deren Wände als schraubenförmige Oberflächen ausgeführt sind.

8. Schnecke nach Ansprüchen 2, 3, 4, 5, 6, dadurch **gekennzeichnet,** dass sie in einem Gehäuse untergebracht ist und mindestens drei schraubenförmige Kanäle bildet, deren Wände von den verschieden gerichteten Oberflächen gebildet sind.

9. Verfahren zur Herstellung einer Hohlschnecke aus Walzband nach Anspruch 1, bei dem die Bänder (45) entsprechend der Anzahl der Führungsflächen der Schnecke durch Verdrehen eines jeden Bandes in Längsrichtung relativ zu der eigenen Achse $O_1$-$O_1$ geformt werden, dadurch **gekennzeichnet,** dass die verdrehten Bänder (45) gebogen werden, indem deren Längskanten (47) nach einer Schraubenlinie relativ zu der Längsachse der Schnecke mit einem gleichen Schritt und einem gleichen Durchmesser angeordnet, und die Bänder an diesen schraubenförmigen Kanten (47) verbunden werden.

10. Verfahren nach Anspruch 9, dadurch **gekennzeichnet,** dass jedes Band (45) einzeln so hergestellt wird, dass ein Ende fest eingespannt und das andere Ende nach einer Schraubenlinie relativ zu der Längsachse der Schnecke gedreht wird, und die auf diese Weise gefertigten Bänder an den Längskanten miteinander verbunden werden.

11. Verfahren nach Anspruch 9, dadurch **gekennzeichnet,** dass jedes der Bänder (45) durch einen schlitzförmigen Halter geführt wird, die Bänder vorherig miteinander verbunden werden, und anschliessend die miteinander verbundenen Bänder gedreht und fortschreitend mit gleichbleibender Geschwindigkeit bewegt werden, wobei sie gleichzeitig so gebogen werden, dass ihre Längskanten (47) auf einer Schraubenlinie relativ zu der Schneckenachse liegen.

12. Verfahren nach Anspruch 9, dadurch **gekennzeichnet,** dass vor dem Verdrehen jedes Bandes (49, 52, 55) Zonen (50, 51, 53. 56, 57) eines abgeschwächten Querschnittes des Bandes in Querrichtung nach Linien hergestellt werden, die paarweise unter einem Winkel relativ zu-einander und zu den Längskanten der Bänder durch Ausführung von Einkerbungen (56, 57) unter verschiedenen Neigungswinkeln ($\alpha$, $\beta$, $\psi$, $\lambda$, $\phi$, $\omega$) der Wände der Einkerbungen liegen, wobei die Geometrie und die Grösse der Winkel ($\alpha$, $\beta$, $\psi$, $\lambda$, $\phi$, $\omega$) der Wände der Einkerbungen und deren gegenseitige Anordnung die Ganganzahl und die Ganghöhe der Schraubenlinien bestimmen.

13. Verfahren nach Anspruch 12, dadurch **geke-**

**nnzeichnet,** dass man die Zonen (49, 52, 55) eines abgeschwächten Querschnittes herstellt, indem man die Einkerbungen (56, 57) abwechselnd an verschiedenen entgegengesetzten Seiten ausführt, die Bänder (49, 52, 55) mit unterschiedlichen Kombinationen der Neigungswinkel ($\alpha$, $\beta$, $\psi$, $\lambda$, $\phi$, $\omega$) der Wände, der Abschrägungen der Einkerbungen (56, 57) für jede der Seiten des Bandes (49, 52, 55) und dann die Ränder der Einkerbungen (56, 57) miteinander verbindet.

FIG.1

FIG.2

FIG.3

FIG.4

FIG.5

9

FIG.6

FIG.7

FIG. 8

FIG. 9

FIG. 10

FIG.11

FIG.12

FIG.13

FIG.14

FIG.15

FIG.16

FIG.17

FIG.18

# INTERNATIONAL SEARCH REPORT

International Application No PCT/SU 89/00246

| I. CLASSIFICATION OF SUBJECT MATTER (if several classification symbols apply, indicate all) [6] |
|---|
| According to International Patent Classification (IPC) or to both National Classification and IPC |

Int.Cl.[5]   B 65G 33/00, 33/26, B21D  11/06

## II. FIELDS SEARCHED

| Minimum Documentation Searched [7] | |
|---|---|
| Classification System | Classification Symbols |
| Int.Cl.[4] | B65G 33/00÷33/26,  B21D  11/06 |

| Documentation Searched other than Minimum Documentation<br>to the Extent that such Documents are Included in the Fields Searched [8] |
|---|
| |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | SU, A1, 1260306 (G.V.SERGA), 30 September  1986 (30.09.86), the abstract (cited in the description) | 1-13 |
| A | FR, A1, 2434663 (SIGMA KONCERN), 28 March 1980 (28.03.80), figure 3 | 1 |
| A | DE, A1, 2414677 (O.SODER & CIE. AG MASCHINEN – u. APPARATEFABRIK), 17 October 1974 (17.10.74) figure 1 | |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 9 April 1990 (09.04.90) | 24 April 1990 (24.04.90) |
| International Searching Authority | Signature of Authorized Officer |
| ISA/SU | |

Form PCT/ISA/210 (second sheet) (January 1985)